(19) Europäisches Patentamt
European Patent Office
Office européen des brevets

(11) **EP 2 983 082 A1**

(12) **EUROPEAN PATENT APPLICATION**
published in accordance with Art. 153(4) EPC

(43) Date of publication:
**10.02.2016 Bulletin 2016/06**

(21) Application number: **14779799.7**

(22) Date of filing: **01.04.2014**

(51) Int Cl.:
***G06F 7/06*** (2006.01)

(86) International application number:
**PCT/ES2014/070250**

(87) International publication number:
**WO 2014/162033 (09.10.2014 Gazette 2014/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.04.2013 ES 201330465**

(71) Applicants:
• **Crambo, S.A.**
**28850 Torrejón de Ardoz (Madrid) (ES)**

• **Garcia Manchado, Nilo**
**28850 Torrejon De Ardoz (ES)**

(72) Inventor: **GARCIA MANCHADO, Nilo**
**E-28850 Torrejón de Ardoz (Madrid) (ES)**

(74) Representative: **Sahuquillo Huerta, Jesús**
**Jesana IP**
**Apartado de Correos, 30**
**28300 Aranjuez (ES)**

(54) **METHOD, MOBILE DEVICE, SYSTEM AND COMPUTER PRODUCT FOR DETECTING AND MEASURING THE ATTENTION LEVEL OF A USER**

(57) The invention relates to a system, a method, a mobile device and a computer product for detecting and measuring the attention level of a user, which analyses the amount of times the user or visitor views a certain content in a certain file; analyses the duration and the type of content viewed; and adds a variable to the content, called content attention level, which indicates two magnitudes: one magnitude which is relative in relation to other contents of identical typology; and a second magnitude which is absolute, and consists of a variable between the quantity of content contained in the file and, consequently, a minimum amount of time required to view the content with attention and the amount of time during which the user actually accessed the file.

Fig.1

EP 2 983 082 A1

## Description

The object of the present invention is a method, a mobile device, a system and a computer product applicable to smart mobile phones, tablets and, in general, any computer equipment that can be configured to know more precisely the attention level of a user with respect to other users and/or any computer file with respect to another, evaluate it and systematize it for use in searches of documents in large databases and/or Web content analysis.

## State of the art

Communication networks such as the Internet are normally used to establish relationships between different users. However, relations between the different users do not provide the same degree of information regarding the interest relative to each other in the same way that it can be established in social relationships outside the scope of the network.

It is very important for most users to know what the attention level is having other users with which a relationship is established, that is, knowing *what perception others users have about oneself.* There are social networks that indicate that someone has visited our profile (such as LinkedIn®), however, this information is limited, since it simply indicates the mere visit (no time measurement) and may be due to a mere error or a casual access to the same.

Therefore, a tool that allows knowing, evaluating and systematizing the attention level that a user has with respect to another in the field of social networks is required.

Outside the scope of social networks, in the web sphere taken broadly, it is not possible to know the attention level of a user on any certain content. To date, the tools for visit analysis to a certain Web are based on measuring the number of times the content has been viewed as well as the amount of time a person before the website, i.e., which has opened said page, subtracting the loading time of the site and loading time of the next one. Another well known possibility is the analysis of the cookies, counting the number of times a user visits the website and the times said user has accessed to the same content, i.e., determining whether it is or not a new user.

However, these systems or tools do not take into account that the user may be doing anything else while the page loads and has no interest in the content displayed on the same. That is, a user may open a certain page and does not interact with the same, which usually indicates a real absence of the user or a manifest lack of interest (for example, because at that time he has been called by phone) and really it does not allow visitors to use the visitor indicator as a "real" indicator of a user's interest for the content, since tools are not implemented to discriminate these anomalous situations.

In any case, any web visit analyzer downplays its results based on the contents in a single page, such as for example the cover of a digital newspaper, so it is impossible to know the real interest of the user.

Another related problem, or rather as a extrapolation of the indicated problems is to know the attention level of a user in relation to the content of a document accessible and editable by the user itself that allows optimizing the search for information in large databases.

To do this, we start from the well-known fact that the human memory is divided into two types: short-term memory and long-term memory. On the other hand, in the process of recovery of information in memory it is postulated that processes of recovery are fixed and the same for different tasks and they always involve the access to information stored by means of any recovery key. This encoding specificity principle postulates that no coding key even being strongly related to the item to be remembered may not be effective unless it matches the key used. That is, over time, the specific keys for retrieval information that a user stores in the memory can be easily lost.

Nevertheless, in the current search engines, of both documents within an internal database, and the documents stored on a personal computer's hard disk, or external, such as a database accessible via the web, are mainly based on the name of the document or the keywords attached to it, but never by the fact that the user has previously shown special interest in said document.

This problem, arising from the lack of a practical tool to know the real interest of a user has an important technical reflection, which is postulated as the general technical problem solved by the present invention. This problem can be technically defined as the reduction of data traffic in communication networks by optimizing the speed of access to data by the user.

The document WO2011139477 refers to a system for the determination of interest based on words or tags that analyzes the interest of a user in said words. Similarly, it implements a tag cloud that allows knowing the interest of an Internet user group, and through that method, selecting more effectively the content that the user receives.

The basis of this document is to inform content providers of words that users are interested in and thus send content more consistent with what the user wants. It also allows the user to insert an interest that is not in the cloud.

How to present this system of valuation of interest materializes through a cloud of words and to define the interest it analyzes the mails, searches and Web browsing history, the content may also be Web pages, videos, or any other document that makes possible to build said tag cloud. That is, it analyzes these documents and defines the level of interest with regard to the words this document includes.

This document explains that the interest is a reflection of the relationship between the user and words, allowing the creation of a tag cloud that defines the interest of the user in content.

This document also includes mechanisms to change the level of interest that the user has in a word. As the basis of its access to the interest of a content is the word, the system always relates content with a word, although it has no a specific word for it.

For example, in a video in which a dog is shown, the video is associated with the word dog, but if the system has been wrong in assigning the word dog the user can assign another word to that content.

Therefore, the stated document is able to relate different contents with a common level of significance since so the words are related to the level of significance dedicated by the users to contents that have no the word, but have a relationship with it. Thus, the word becomes the primary interface that the system uses to interact with everything that has or not significance within the content.

This system, among other things, can not find contents without knowing a word associated therewith. Also, it does not analyze the interest of each document without associating with a word, but it analyzes the words of the document and its importance and develops a communication interface with the user through the words and its related tag cloud. It also allows the input of words that the system has not identified as important within its inputs in such a way that there are words that are not associated with any document and however have defined a level of interest that is not useful to resolve the raised technical problem.

**Description of the invention**

Today it is well known the increase in data traffic through mobile networks, forcing a costly increase in the capacities of operators. In addition, in conventional networks, data traffic has also increased, forcing providers to increase the network bandwidth to allow normal operation of the same. This data traffic is significantly oversized, and could be reduced significantly if the real interest of a user by certain contents was known, which would allow not only an improvement in the knowledge of the user itself for commercial purposes but the generated traffic would be reduced since it would allow showing in the first place and from highest to lowest interest the data that match the criteria of interest of the user.

This is especially useful to reduce the traffic generated by certain mobile applications or to retrieve information from large databases.

Thus, for example, it occurs in almost all digital newspapers that include the most viewed contents in its cover, which the most viewed contents rarely coincide with the most relevant news or that most commented by readers that, on the other hand, do not have to be the most relevant or important either. There is no other way of cataloging the contents. With the measurement of attention advocated by the present invention it would be possible to organize the news with the content that has given rise to a higher attention level by users and provide only these ones, notably reducing the generated traffic, especially when access is via a mobile application, since usually all information is retrieved on the mobile device when the application opens.

In the present invention, computer file means both a file itself such as for example a document in any ASCII format and a file accessible via the Web such as for example a user profile in a social network or a news on a Web portal.

More specifically and essentially, the invention analyses the amount of times the user or visitor views a certain content in a certain file; analyses the duration and the type of content viewed; and adds a variable to the content, called content attention level, which indicates two magnitudes: one magnitude which is relative in relation to other contents of identical typology or in a certain variable for example one day; and a second magnitude which is absolute, and consists of a variable between the quantity of content contained in the file and, consequently, a minimum amount of time required to view the content with attention and the amount of time during which the user actually accessed the file.

The historical management of files in an extensive database does not include the degree of attention of the user in relation to a particular document or application allowing situations in which users do not locate easily common documents if they have not opened them regularly. In addition, the organization of directories is so complicated that many times users choose to put the most important files on the desktop, for example in the case of Windows or keep dozens or even hundreds of applications open at the same time to access more quickly and above all to avoid the process of finding again that file that is important.

The invention also allows the user to include manually a degree of importance regarding that file or document or application appearing that file document or application in a highlighted manner in relation to others. This would allow freeing free the user memory since he/she does not have to be aware of that document or file that is important to him/her.

Also in a system application, this allows identification of a user, for example a family, and feeding the layer of attention or importance on a personal basis since if two users have access to the same device, the device will understand that it is the same user creating an erroneous layer of attention or importance.

It is also possible with this system to save the layer of attention regardless of the device so that if the user changes device or uses another device he/she can keep the history of attention.

When a layer of attention is added in each document, this information can be useful to search for a particular document. It is common not to remember the specific name of a document although it is very important for us. So far the document identification system was based on the latest edition, viewing the history of a particular program and its documents but in many cases it may be impossible to identify it, since the moment in which we operate with it is not exactly known. Through the browsing history is also possible with great effort to find the document. Some browsers also include systems for the evaluation of a target by indicating which have been visited in the most common way. This is often insufficient since we often remember that most commonly used and we often forget what still being important is not common or routine in our usage. Current systems do not measure the attention level against a content, so it is very difficult to sort documents by the attention level that we had in them.

Through this system the user may sort in a period of time documents by the level of interest that has had in them. It would also be possible for the user by the edition itself of the layer of attention to add the attention level manually so that it is recorded in the system the attention level edited in addition to that defined by the system.

Through time or the cursor movement and its speed within the document, we can know the attention level that a user has for a particular page through the mouse or cursor movements or any other mark indicating the browsing that the user has through the content, such as the movement of a finger on a touch screen. So a web page that is larger than the screen forces the user to move the cursor down to see what content there is beyond what the screen lets him/her see. If the user wait for a time once downloaded the page and then begins to move the page down with the cursor from time to time, it is clear that he/she has a much higher attention than a user that does not move down the cursor or makes it much faster. If these data are related to the amount of text (it refers to text or readable content in a standardized manner by the user on the website) on the page, the result every time is closer to the attention level that the user has in relation to that content.

The latter is also possible to compare it in a relative manner to the rest of content displays by the user. This comparison will give a different ratio, which is the relative attention level of this content in relation to the other contents viewed by the user. This system can facilitate the search for contents without knowing the name of the same, we have data how the relative importance that these data had for the user at a time concrete and filter the same based on the attention level and, for example the date, allowing searches more intuitive than the current search systems based on data such as the moment in which the file was used, or whether the same was edited as well as its name.

To do this, the invention adds a file to the document or through a database that links the file with that document or integrating it within it that is evolving through the use of said file. This log is then analyzed by a system that allows translating these data into an interest or attention level about a document or person. In doing so, and in accessory way, it can be determined within said file the user who has viewed such file so that if the document is not found on the user's computer itself or if the user accesses from different devices he/she can accumulate the attention level to learn about the changes that have occurred in relation to such document in the attention process.

In one of the simplest uses of this system, a histogram of accesses to the document during a certain period of time can be created, in such a way that the user can view the different attention levels in relation to a document or person over time. Simply by the number of actions carried out with respect to the file it would allow viewing and remembering more accurately a particular document that we do not know its name.

In a system application, layers of memory may be added. That is, the documents changing over a short period of time, for example the cover of an online newspaper is changing through the same day in different editions of the cover or in the area of comments for a news that it is changing every time we enter the document, the invention could add a temporary layer of graphical information indicating immediately where the previous attention level stayed and what content is new for the user allowing focusing more quickly the attention on the new content and making more efficient the process of reading the document's content. These layers can be translucent colors so that depending on the different color patterns they allow highlighting automatically both what is new and what is more modern. As well as the attention level the user has had about a specific link previously viewed.

Another area that this system can help to manage is the use of applications. The way in which operating systems organize the applications and the increase in the number of these through the app stores creates situations in which it is difficult to find a particular application in the swarm that entails those downloaded by the user over time. Forms in which they are organized are insufficient to be able to distinguish between important applications among the applications that are not important at all. For the system, an application that has been used for hundreds of hours is the same that applications which are used several minutes and are no longer used. The system analyzes the attention level the user has in relation to a particular application and adds to the same the layer that allows sorting the applications depending on that parameter. Thus it is possible for applications to be sorted based on that measure for example creating an easier access for those who have more attention level and lower to those having a lower attention level.

Another application of the system consists of adding to a read email or message the number of times that it has been opened and the attention level that has had, in such a way that when we return to view it months later, this mail will not be the same since when viewing it again it will include the attention level accumulated and its history.

Another application of the system consists of delimiting if a user has read or not the machine instructions in such a way that if these instructions are on display in such a way that assigning the document a minimal amount of attention from the user, the system can check if the user has paid sufficient attention to the device. It is the case for example of the instructions of a vehicle, the system could only allow the user to use it when the attention level has been enough so that it has that contained in minimum of use and if not, disallow him/her to activate it. This can be used both on the same device or with a document that is accessible by any means, for example a mobile phone to the user and system allows an action when this attention has been the minimum scheduled, so once checked by the system that the user has received the appropriate content activates either remotely or directly the use of the device even in a restricted manner if the attention level has not been enough another example is the action of erasing entire the hard drive of a computer, this action is not an action as any other, the implications of doing so involuntarily can be very serious for the user, consequently the system could only activate the action when it has detected the sufficient attention level on file or content which informs about the consequences of the action, this can be applied to a contract or any other action that requires to check the user has known the content of the document.

The user can also feed in a tactile form or in any other way the contents that do not interest him/her. It is possible that on a page of a newspaper, there are contents which are and which are not of interest to the user. The system can view the page as a whole or delimit the interest because the user has followed a specific web link that develops a particular news. However the system could be much richer if it had the option that the user discards certain contents that are not of interest to him/her, for example by touching them and making a particular movement or gesture on the screen. In this way, the system estimates these contents as not interesting and makes them less relevant in its analysis of interest.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

## Brief description of the drawings

Described very briefly hereinafter are a series of drawings that help to better understand the invention and which are expressly related to an embodiment of said invention that is presented as a non-limiting example thereof.

FIG. 1 shows a diagram of the portable electronic device that implements the present invention.
FIG. 2 shows the diagram of a computer system architecture that illustrates the server architecture used in the different practical embodiments of the invention.
FIG. 3 shows the diagram of a network architecture that illustrates an illustrative operating environment for the different practical embodiments of the invention.

## Explanation of a detailed embodiment of the invention

The object of the present invention is a method and a computer product applicable to any mobile device 100 including laptops, tablets and smart mobile phones.

In order to obtain the best results in relation to the recoverability of information in the user, the system is configured to analyze the amount of times the user or visitor views a certain content in a certain file; analyze the duration and the type of content viewed; and add a variable to the content, called content attention level, which indicates two magnitudes: one magnitude which is relative in relation to other contents of identical typology; and a second magnitude which is absolute, and consists of a variable between the quantity of content contained in the file and, consequently, a minimum amount of time required to view the content with attention and the amount of time during which the user actually accessed the file.

For example, a page including 200 words usually does not require the same time that a page containing 50 words. If it is necessary an average time of one minute and a half to read the document with 200 words and the user takes 10 seconds and is the first time that he/she views this document we will determine, in principle, a low attention level. If the user has previously visited the document we can extrapolate one shorter minimum time. If instead the user takes 3 minutes to view the document we may indicate a high attention level to such document.

However, the system also implements a statistical corrector for the time the user dedicates to a particular file. In the former case, if instead of three minutes, the user takes thirty, it is clear that he/she has not paid the due attention, for example, by an interruption in his/her attention (a phone call for example). To this end, times abnormally high, equal to or more than three times the time stipulated for the reading average are discarded. Logically, if the document is difficult to read the reading average rises, whereby the time dedicated to a concentrated reading also rises, but without altering the ratio between the average and times abnormally higher.

Relative system will relate the time the user normally dedicates to read a content and compares it with some common appearance such as for example the amount of content contained in the document to which he/she dedicates to other type of similar content.

For example, a user views user profiles on a social network and takes, on average, five seconds in viewing each profile and in one specific takes 25 seconds. In this case, it is determined that he/she has a relative attention level higher than for one who takes two seconds. In this case, establishing an abnormally high time to statistically correct the measures can be counterproductive, since a time abnormally higher than the average time, in this example ten minutes instead of the 25 seconds time indicated, it may imply a contact via message or chat showing the maximum interest by the user, so it would be a mistake to delete it. However, in these cases, the system detects the access to the banner of the mailing or messaging application so the criteria established in the first step have already changed, i.e., the average time for a chat or message time is not the average time for profile reading and therefore the criterion of abnormality also varies.

Both criteria separately, i.e., relative and absolute attention separately, already allow reaching the object of the invention, since each of them marks an interest, although the combination of both relative and absolute interest criteria allows for greater security and efficiency in the interest value avoiding false results of the same.

Another element that can determine the attention level in relation to a document is the depth in which that document or content is operated. For example, in an editable document, this can change several times throughout the period of elaboration, determining that a file has an attention level greater than a file that has just been read and open once. This is an additional and complementary element in relation to the relative and absolute interest explained.

Attention analysis system consists of a data layer embedded in the file that allows viewing the history of the attention to a document by one or more viewers of the same.

For example, the same file has been sent to several people and they have had an attention and focus level by certain parts of the document, so the system can provide information about the experience in the form of attention that a document has had in a first reader against a second reader.

The second reader can edit the attention layer of the document layer and include notes or underlines indicating to other readers that his/her attention level to that particular part of the document has been much greater than on the rest. So documents can be enriched with readings of others besides with the comments that others have been added in this document.

This or these layers of attention include the attention history of the document in the form of date, time, and attention level of each one of those who have viewed the document. Therefore, it involves the attachment to the document of a layer that allows adding the attention that either a particular user or others have had in a file, whether it is a document, a media file or a social network user that throughout the description are used as synonyms.

The information of attention or interest in a particular document information can be shared in real time by the system with the owner of the information, for example the user itself referred to in the user tab of a social network or the user who created or published the article in such a way that the user of the social network have alarms that can indicate certain attention levels from visitors of his/her profile or specific users visiting his/her profile are currently expressing a certain attention level. With this system it is also possible to maintain a connection with the interest that the messages that we send to our senders and files that we share with them create, so the system could alert or express as a number or graphic the level of interest that a particular message has caused in a person. In this sense, it should be noted that in the case of messages a fact to be considered is the response time, i.e. not only the time during which the user has been viewing the message but the time even when it is available or accessible to the user the message receiver has been slow to view it, this variable can be absolute or relative. These data indicate a level of accessibility that may also be relevant. This level of accessibility is based on the fact that the user for a communication action, the issuer of the same may want to know the level of accessibility between both contacts, i.e. how long the communication receiver takes to respond when it knows the interest of the issuer to contact or access the content that the issuer has issued and operate with it.

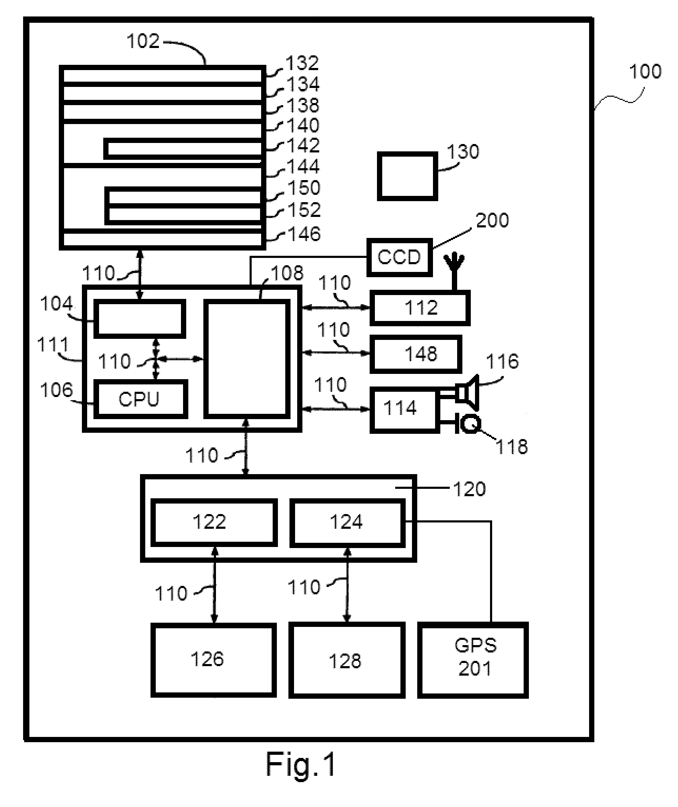

The present invention is implemented in a portable electronic device or mobile device 100 which may be any selected from computers, tablets and mobile phones, although a preferred architecture for a mobile device is shown in FIG. 1. In general, any programmable communication device can be configured as a device for the present invention.

FIG. 1 shows a portable electronic device according to some embodiments of the invention. The portable electronic device 100 of the invention includes a memory 102, a memory controller 104, one or more processing units (CPU) 106, a peripherals interface 108, a RF circuitry 112, an audio circuitry 114, a speaker 116, a microphone 118, an input/output (I/O) subsystem 120, a screen 126, other input or control devices 128, and an external port 148. These components communicate over the one or more communication buses or signal lines 110. The device 100 can be any portable electronic device, including but not limited to a handheld computer, a tablet, a mobile phone, a media player, a personal digital assistant (PDA), or the like, including a combination of two or more of these items. It should be appreciated that the device 100 is only one example of a portable electronic device 100, and that the device 100 may have more or fewer components than shown, or a different configuration of components. The various components shown in FIG. 1 may be implemented in hardware, software or a combination of both hardware and software, including one or more signal processing and/or application specific integrated circuits. In the same way, the screen 126 has been defined as touch-sensitive, although the invention may also be implemented in devices with a standard screen.

The memory 102 may include high speed random access memory and may also include non-volatile memory, such as one or more magnetic disk storage devices, flash memory devices, or other non-volatile solid state memory devices. In some embodiments, the memory 102 may further include storage remotely located from the one or more processors 106, for instance network attached storage accessed via the RF circuitry 112 or external port 148 and a communications network (not shown) such as the Internet, intranet(s), Local Area Networks (LANs), Wide Local Area Networks (WLANs), Storage Area Networks (SANs) and the like, or any suitable combination thereof. Access to the memory 102 by other components of the device 100, such as the CPU 106 and the peripherals interface 108, may be controlled by the memory controller 104.

The peripherals interface 108 couples the input and output peripherals of the device to the CPU 106 and the memory 102. The one or more processors 106 run various software programs and/or sets of instructions stored in the memory 102 to perform various functions for the device 100 and to process data.

In some embodiments, the peripherals interface 108, the CPU 106, and the memory controller 104 may be implemented on a single chip, such as a chip 111. In some other embodiments, they may be implemented on separate chips.

The RF (radio frequency) circuitry 112 receives and sends electromagnetic waves. The RF circuitry 112 converts electrical signals to/from electromagnetic waves and communicates with communications networks and other communications devices via the electromagnetic waves. The RF circuitry 112 may include well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. The RF circuitry 112 may communicate with the networks, such as the Internet, also referred to as the World Wide Web (WWW), an Intranet and/or a wireless network, such as a cellular telephone network, a wireless local area network (LAN) and/or a metropolitan area network (MAN), and other devices by wireless communication. The wireless communication may use any of a plurality of communications standards, protocols and technologies, including but not limited to Global System for Mobile Communications (GSM), Enhanced Data GSM Environment (EDGE), wideband code division multiple access (W-CDMA), code division multiple access (CDMA), time division multiple access (TDMA), Bluetooth, Wireless Access (Wi-Fi) (e.g., IEEE 802.11a, IEEE 802.11b, IEEE 802.11g and/or IEEE 802.11n), voice over IP (VoIP), Wi-MAX, a protocol for email, instant messaging, and/or Short Message Service (SMS), or any other suitable communication protocol, including communication protocols not yet developed as of the filing date of this document.

The audio circuitry 114, the speaker 116, and the microphone 118 provide an audio interface between a user and the device 100. The audio circuitry 114 receives audio data from the peripherals interface 108, converts the audio data to an electrical signal, and transmits the electrical signal to the speaker 116. The speaker converts the electrical signal to human-audible sound waves. The audio circuitry 114 also receives electrical signals converted by the microphone 116 from sound waves. The audio circuitry 114 converts the electrical signal to audio data and transmits the audio data to the peripherals interface 108 for processing. Audio data may be may be retrieved from and/or transmitted to the memory 102 and/or the RF circuitry 112 by the peripherals interface 108. In some embodiments, the audio circuitry 114 also includes a headset jack (not shown). The headset jack provides an interface between the audio circuitry 114 and removable audio input/output peripherals, such as output-only headphones or a headset with both output (headphone for one or both ears) and input (microphone).

The I/O subsystem 120 provides the interface between input/output peripherals on the device 100, such as the touch screen 126 and other input/control devices 128, and the peripherals interface 108. The I/O subsystem 120 includes a touch screen controller 122 and one or more input controllers 124 for other input or control devices. The one or more input controllers 124 receive/send electrical signals from/to other input or control devices 128. The other input/control devices 128 may include physical buttons (e.g., push buttons, rocker buttons, etc.), dials, slider switches, and/or geographical location means 201, such as GPS or similar.

In this practical embodiment, the touch screen 126 provides both an output interface and an input interface between the device and a user. The touch screen controller 122 receives/sends electrical signals from/to the touch screen 126. The touch screen 126 displays visual output to the user. The visual output may include text, graphics, video, and any combination thereof. Some or all of the visual output may correspond to user-interface objects, further details of which are described below.

The touch screen 126 also accepts input from the user based on haptic contact. The touch screen 126 forms a touch-sensitive surface that accepts user input. The touch screen 126 and the touch screen controller 122 (along with any associated modules and/or sets of instructions in the memory 102) detects contact (and any movement or break of the contact) on the touch screen 126 and converts the detected contact into interaction with user-interface objects, such as one or more soft keys, that are displayed on the touch screen. In an exemplary embodiment, a point of contact between the touch screen 126 and the user corresponds to one or more digits of the user. The touch screen 126 may use LCD (liquid crystal display) technology, or LPD (light emitting polymer display) technology, although other display technologies may be used in other embodiments. The touch screen 126 and touch screen controller 122 may detect contact and any movement or break thereof using any of a plurality of touch sensitivity technologies, including but not limited to capacitive, resistive, infrared, and surface acoustic wave technologies, as well as other proximity sensor arrays or other elements for determining one or more points of contact with the touch screen 126.

The device 100 also includes a power system 130 for powering the various components. The power system 130 may include a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

In some embodiments, the software components include an operating system 132, a communication module (or set of instructions) 134, a contact/motion module (or set of instructions) 138, a graphics module (or set of instructions) 140, a user interface state module (or set of instructions) 144, and one or more applications (or set of instructions) 146.

The operating system 132 (e.g., Darwin, RTXC, LINUX, UNIX, OS X, WINDOWS, or an embedded operating system) includes various software components and/or drivers for controlling and managing general system tasks (e.g., memory management, storage device control, power management, etc.) and facilitates communication between various hardware and software components.

The communication module 134 facilitates communication with other devices over one or more external ports 148 and also includes various software components for handling data received by the RF circuitry 112 and/or the external port 148. The external port 148 (e.g., Universal Serial Bus (USB), FIREWIRE, etc.) is adapted for coupling directly to other devices or indirectly over a network (e.g., the Internet, wireless LAN, etc.).

The contact/motion module 138 detects contact with the touch screen 126, in conjunction with the touch screen controller 122. The contact/motion module 138 includes various software components for performing various operations related to detection of contact with the touch screen 126, such as determining if contact has occurred, determining if there is movement of the contact and tracking the movement across the touch screen, and determining if the contact has been broken (i.e., if the contact has ceased). Determining movement of the point of contact may include determining speed (magnitude), velocity (magnitude and direction), and/or an acceleration (including magnitude and/or direction) of the point of contact. In some embodiments, the contact/motion module 126 and the touch screen controller 122 also detects contact on the touchpad.

The graphics module 140 includes various known software components for rendering and displaying graphics on the touch screen 126. Note that the term "graphics" includes any object that can be displayed to a user, including without limitation text, web pages, icons (such as user-interface objects including soft keys), digital images, videos, animations and the like.

In some embodiments, the graphics module 140 includes an optical intensity module 142. The optical intensity module 142 controls the optical intensity of graphical objects, such as user-interface objects, displayed on the touch screen 126. Controlling the optical intensity may include increasing or decreasing the optical intensity of a graphical object. In some embodiments, the increase or decrease may follow predefined functions.

The user interface state module 144 controls the user interface state of the device 100. The user interface state module 144 may include a lock module 150 and an unlock module 152. The lock module detects satisfaction of any of one or more conditions to transition the device 100 to a user-interface lock state and to transition the device 100 to the lock state. The unlock module detects satisfaction of any of one or more conditions to transition the device to a user-interface unlock state and to transition the device 100 to the unlock state.

The one or more applications 130 can include any applications installed on the device 100, including without limitation, a browser, address book, contact list, email, instant messaging, word processing, keyboard emulation, widgets, JAVA-enabled applications, encryption, digital rights management, voice recognition, voice replication, location determination capability (such as that provided by the global positioning system (GPS)), a music player (which plays back recorded music stored in one or more files, such as MP3 or AAC files), etc.

In some embodiments, the device 100 may include one or more optional optical sensors (not shown), such as CMOS or CCD image sensors, for use in imaging applications.

However, the indicated hardware structure is one of the possible and it must be taken into account that the device 100 may include other elements for capturing images such as a camera, scanner, laser plotter or the combination of any of these types of devices, which may provide the mobile device the display of the actual environment in video format, sequence of images, vector format or any combination of the above formats.

Similarly, the device 100 may include geographic location devices based on networks of GPS positioning satellites, devices of geographical location aid, based on GPS satellite networks, and IP location of Internet networks -AGPS-, geographical location devices based on the triangulation of radio signals provided by WIFI antennas and Bluetooth® devices (ISSP), the combination of any of these mentioned devices or any type of device which allows providing the mobile device numerical data of its geographical location.

The device 100 may include any type of element capable of displaying images in real time with a minimum of 24 FPS (Frames Per Second) such as TFT, TFT-LED, TFT-OLED, TFT-Retina displays, the combination of any of the above as well as new generation Holo-TFT and transparent displays, and Micro-Projectors, or any graphic display device that can provide the mobile device 100 a way of displaying visual content for the user.

The device 100 includes a processor or set of processors that by themselves or in combination with graphics processors such as GPU (Graphics Processing Unit) or APU (Accelerated Processing Unit) can provide the mobile device 100 the ability to display, in real time, vector graphics and conform polygons textured with these, through libraries for vector representation (sets of standardized procedures of graphic representation for different platforms) such as OpenGL, DirectX or any type of libraries intended for this purpose.

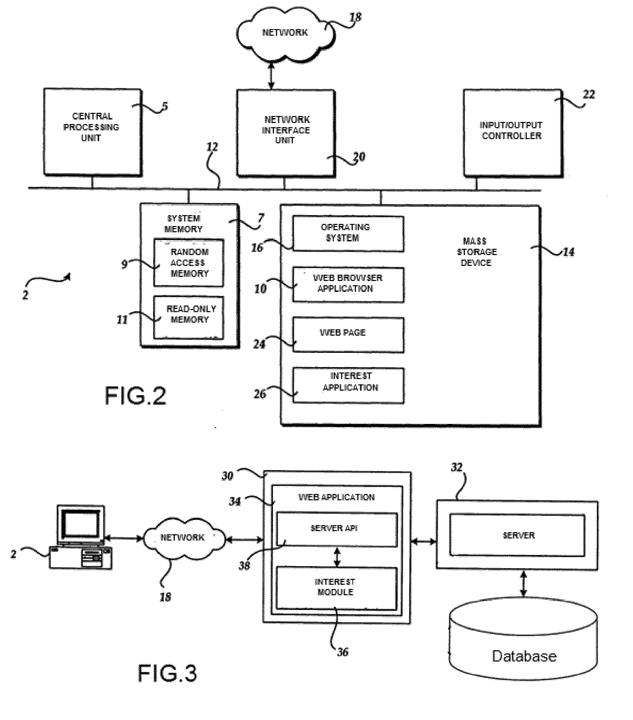

Referring now to the FIGs. 2 and 3 and the corresponding description are intended to provide brief, general description of a suitable computing environment (a server and a personal computer) in which embodiments of the invention may be implemented. While the invention will be described in the general context of program modules that execute on server computer systems and mobile devices 100, those skilled in the art will recognize that the invention may also be implemented in combination with other types of computer systems and program modules.

Generally, program modules include routines, programs, components, data structures, and other types of structures that perform particular tasks or implement particular abstract data types. The invention may also be practiced in distributed computing environments where tasks are performed by remote processing devices that are linked through a communications network. In a distributed computing environment, program modules may be located in both local and remote memory storage devices.

Referring now to FIG. 2, an illustrative computer architecture for a computer 2 utilized in the various embodiments of the invention will be described. The computer architecture shown in FIG. 4 illustrates a conventional desktop, laptop computer, and which also can be used as a server, including a central processing unit (CPU) 5, a system memory 7, including a random access memory (RAM) 9 and a read-only memory (ROM) 11, and a system bus 12 that couples the memory to the CPU 5. A basic input/output system containing the basic routines that help to transfer information between elements within the computer, such as during startup, is stored in the ROM 11. The computer 2 further includes a mass storage device 14 for storing an operating system 16, application programs, and other program modules, which will be described in greater detail below.

The mass storage device 14 is connected to the CPU 5 through a mass storage controller (not shown) connected to the bus 12. The mass storage device 14 and its associated computer-readable media provide non-volatile storage for the computer 2. Although the description of computer-readable media contained herein refers to a mass storage device, such as a hard disk or CD-ROM drive, it should be appreciated by those skilled in the art that computer-readable media can be any available media that can be accessed by the computer 2.

By way of example, and not limitation, computer-readable media may include computer storage media and communication media. The computer storage media may include volatile and non-volatile, removable and non-removable media implemented in any method or technology for storage of information such as computer-readable instructions, data structures, program modules or other data. For example, computer storage media include, but is not limited to, RAM, ROM, EPROM, EEPROM, flash memory or other solid state memory technology, CD-ROM, digital versatile disks (DVD), HD-DVD, BLU-RAY, or other optical storage, magnetic cassettes, magnetic tape, magnetic disk storage or other magnetic storage devices, or any other medium which can be used to store the desired information and which can be accessed by the computer 2.

According to various embodiments of the invention, the computer 2 may operate in a networked environment using logical connections to remote computers through a network 18, such as for example the Internet. The computer 2 may connect to the network 18 through a network interface unit 20 connected to the bus 12. It should be appreciated that the network interface unit 20 may also be utilized to connect to other types of networks and remote computer systems. The computer 2 may also include an input/output controller 22 for receiving and processing input from a number of other devices, including a keyboard, electronic stylus (not shown in FIG. 2). Similarly, an input/output controller 22 may provide output to a display screen, a printer, or other type of output device.

As mentioned briefly above, a number of program modules and data files may be stored in the mass storage device 14 and RAM 9 of the computer 2, including an operating system 16 suitable for controlling the operation of a networked desktop computer, such as for example the WINDOWS® operating system from MICROSOFT CORPORATION®. The mass storage device 14 and RAM 9 may also store one or more program modules. In particular, the mass storage device 14 and the RAM 9 may store a Web browser application program 10. As known to those skilled in the art, the Web browser application program 10 is operative to request, receive, render, and provide interactivity with electronic documents, such as a Web page 24 that has been formatted using HTML. Moreover, the Web browser application program 10 may be operative to execute scripts contained in the Web page 24, such as scripts expressed utilizing the JAVA SCRIPT language from SUN MICROSYSTEMS, INC. According to one embodiment of the invention, the Web browser application program 10 comprises the INTERNET EXPLORER Web browser application program from MICROSOFT CORPORATION. It should be appreciated, however, that other Web browser application programs from other manufacturers may be utilized to embody the various aspects of the present invention, such as for example the FIREFOX Web browser application from the MOZILLA FOUNDATION.

In particular, the Web page 24 may include HTML and scripts which, when displayed by the Web browser application 10, provide a visual display for program(s) stored on the computer 2 acting as a server 30. Moreover, the scripts included in the Web page 24 allow a user of the computer to interact with the display provided by the Web browser application 10 and modify the application 10.

Referring now to FIG. 3, a network architecture diagram illustrating an operating environment for the various embodiments of the invention is described. As shown in FIG. 3, the computer 2 is connected to a network 18. An application server 30 is also connected to the network 18. The application server 30 comprises a computer which may contain some or all the conventional computing components described above in relation to FIG. 2. Additionally, the application server 30 is operative to execute an application from the Web server for receiving and responding to requests for documents stored at or accessible to the application server 30. Moreover, the application server 30 is operative to receive and respond to requests in relation to the pages generated by a Web application 34. The Web application 34 may comprise code executable at the application server 30, code executable for communicating with other computers, and may include templates, graphics, audio files, and other content known to those skilled in the art.

According to other aspect of the invention, the Web application 34 is operative to provide an interface to a user of the computer 2 to interact with the page or document accessible via network 18. In particular, the Web application 34 utilizes a server application programming interface (API) 38.

As discussed in greater detail below, the computer 2 can transmit a request to the application server 30 to display the working interface of the invention within the context of the Web browser application program 10. In response to such request, the Web application 34 communicates with the server 32 through the server API 38 and retrieves the information from the database.

Attention module 36 is responsible for establishing and calculating the level of interest of a user in accordance with the invention in the server. The attention application 26 is responsible for establishing and calculating the level of interest for a computer 2 in local mode.

In addition to the above, it is possible to establish additional criteria to assess the interest. Different users use the user interfaces very differently. For example, there are users that follow the reading with the mouse and others that deviate the mouse to facilitate the reading. In the event of a motion of the mouse is detected following the reading, it will be possible to take advantage of that movement to determine the part read with more attention than others. The scroll down motion with down arrow or with the central part of the mouse also indicate in which the reader of the document is since if he/she moves down means that he/she is normally in the middle of the document down and the time difference between the scroll down moment and the existing content at the top allows calculating the level of interest in those parts that disappear from the visible part of the user since they rises upward leaving visible the lower part of the document. In the same way, on the mobile device 100 that logically has no pointer or mouse, the cursor would pass by the detection of user movement on the touch screen 126 and his/her scroll speed.

The layer of interest of the history can be performed in three different ways, using at least one or combined among them: one from the editing program itself, other from the operating system and the other one by checking the use of the system by an external program.

In the first case, from the editing program of the file, the program itself adds an interest management process within its source code.

In the second case, all programs that the operating system opens are divided between those with which the user interacts and processes in which the user does not interact. In programs in which the user interacts, an interface for measuring the interest is added in the program in such a way that the operating system itself measures the level of interest in each program and each file opened by the different programs.

The third option is to implement a program for controlling the use of the user's device and this acts in a similar way to programs for controlling actions that control the use of computer 2 or mobile device 100, for example, recording all activity of the person and adding with the name of the file in that program a algorithmic relationship to interest that the user has on that file creating a file that is related to the previous one (for example a log).

Search for interest is based on organizing in descending order the level of interest in a listing of files, programs, or any file, program or document. Since we add to the file or document the interest or attention variable through a number that comes out of the algorithm of interest that we have defined, it is possible to sort the documents by level of interest and thus make a search for the same without knowing a word to search.

For a better understanding, there follows an example applied to a social network where there is for example a list of actions to be monitored:

Listing, View profile, Enlarge photo and Send message.

We define a series of scores for each action:

List = 1
Profile = 2
Time_profile = .5 (per second)

Photo = 3
Time_photo = .5 (per second)
Message = 5

A list of scores is created with the following fields:

User, Action, Date and Score.

If an action on a user occurs, it is proven to be any of the previously defined types:

*If action in List of actions:*

*If (action=List) or (action=Message):*
*We insert a record for that User with the score defined for that action.*
*If not, (actions view profile or enlarge photo)*
*We launch a process(Score) that counts the duration of such action and thus, to return the corresponding score.*

*function Score (Action, time var): double*
*If time<3 sec we insert a line for that user with action and the score previously defined for that action,*
*if not, the score is calculated as follows:*

*If a record exists for that user and that action, the sum of the score is multiplied by two and said sum is subtracted: (Σscore-1)x2 (If this value is lower than the corresponding to the score by default, it would take the latter),*
*otherwise the score defined for that action is added to that corresponding to the time that it has occurred: For example: Profile + Time_profile\*no. seconds*

Calculation of the absolute attention of a user: the sum of scores corresponding to the desired time interval (session, last month, life...) for such user.

For the calculation of the relative attention of that user, we will make the average of that obtained for the total number of users in the same time interval:

$$\Sigma users / \Sigma scores.$$

The user can assign an assessment manually so that if he/she finds a value that does not match what he/she estimates that the attention level that has in the content should be he/she changes it. Other reason to change or add a manual assessment by the user has to do with if the user decides to communicate to third parties an attention level different from that system gives him/her since this information may be shared with third parties.

With this assessment, the system can modify some of the parameters used to assess, that is, the difference between the score that the system assigns and that offered by the user can allow the system to change or evolve the algorithm.

The user can also modify (upwards or downwards) his/her assessment of a user (user assessment).

Finally, the invention may include, in addition, if the document has been read (which is a variable between the time and the number of words that the document includes and the page where the user is), if it has not read, the number of times it has been viewed, the number of occasions where with content has been interacted, the movements of the mouse or cursor over the document, the use of the zoom in photos, the number of times that an application opens, the time during which the information is kept in a place available of the desktop or applications, for example open browser windows that although are not opened they are available to the user in a window, the interaction time, for example, a phone number with which interact on a regular basis with respect to other phones with which it does not interact or any other magnitude that can be interpreted as compared with other that defines a interest or attention level to a content, advertisement, user or phone.

In a particular embodiment, the invention detects the user attention interpreting the image of the same captured by a camera turned on when the file is opened by the user. That camera can be the CCD sensor 200 of the mobile device 100 or a camera connected to computer 2, such as a webcam. In either of the two cases, both the mobile device 100 and computer 2, it includes the programs necessary to recognize the user image and interpret the interest thereof, for example, by detecting that he/she effectively pays attention to the screen showing the contents of the file or even though the file is open, really his/her attention lies in something else, such as for example the phone, and therefore the established interest would be also weighted.

Finally, it should be pointed out that the invention is valid for any type of computer file but, logically, for each type of file of interest, the criteria can be weighted to give more weight to one or other or even to establish any criteria or additional action to determine the interest.

**Claims**

1. Method for detecting and measuring the attention level of a user comprising the steps of
   detecting a user's access to a computer file or application;
   establishing the type of computer file, including the quantity of content contained therein, and the average reading or usage time for said content;
   counting the number of times that said user accesses said computer file; determining the said user's access time to said computer file or application; **char-**

**acterized in that** it comprises the steps of comparing the user's access time to the computer file to:

the amount of content in the computer file, the average reading or usage time established for said content and the user's access time to the computer file; and/or
the average access time to at least a second file computer; and

establishing an attention level depending on the previous comparative weighted by the number of times that the user accesses the computer file.

2. Method according to claim 1 comprising establishing the number of times the computer file has been edited in such a was that the level of interest will be higher the greater the number of times that the file has been edited.

3. Method according to claims 1 and 2, wherein a data layer with the history of attention level including date and time is established in the computer file.

4. Method according to any of claims 1-3, wherein it comprises the step of activating the camera when the user accesses a computer file; recording the user during the access to the computer file and interpreting the image for establishing an attention level of the user in relation to the computer file and/or its content.

5. A mobile device (100) comprising:

a touch screen (126);
one or more processors (106);
a memory (102); and
one or more programs (136 to 146) wherein the program(s) (132 to 146) are stored in the memory (102) and configured to be executed by the processor(s) (106); **characterized in that** the programs (132 to 146) include instructions for:
detecting a mobile device (100) user's access to a computer file;
establishing the type of computer file, including the quantity of content contained therein, and the average reading time for said content;
counting the number of times that said user accesses said computer file;
determining the said user's access time to said computer file;
comparing the user's access time to the computer file to:

the amount of content in the computer file, the average reading time established for said content and the user's access time to the computer file; and
the average access time to at least a second file computer stored in the memory (102);

establishing an attention level weighted by the number of times that the user accesses the computer file.

6. A devices (100) according to claim 5 comprising a CCD image sensor (200) and wherein the programs (132 to 146) include instructions for:

initiating the CCD image sensor (200) when the user accesses a computer file;
recording the user during the access to the computer file; and
interpreting the user image for establishing an attention level.

7. A computer (2) with Web access via a communication network (18) comprising one or more processors (5);
a memory (7, 14); and
one or more programs (26, 36) wherein said programs are stored in a memory (7, 14) and configured to be executed by the processor(s) (5), **characterized in that** the programs (26, 36) include instructions for:

detecting the computer (2) user's access to a computer file;
establishing the type of computer file, including the quantity of content contained therein, and the average reading time for said content;
counting the number of times that said user accesses said computer file;
determining the said user's access time to said computer file;
comparing the user's access time to the computer file to:
the amount of content in the computer file, the average reading time established for said content and the user's access time to the computer file; and
the average access time to at least a second file computer stored in the memory (14);
establishing an attention level weighted by the number of times that the user accesses the computer file.

8. A computer (2) according to claim 7 comprising a camera connected to said computer (2) and wherein the programs (26, 36) include instructions for:

initiating the camera when the user accesses a computer file;
recording the user during the access to the computer file; and

interpreting the user image for establishing an attention level.

9. System for detecting and measuring the attention level of a user comprising
a mobile device (100) according to claim 5-6; and
a central server (30) accessible via web (18) from said mobile device (100) and/or from the computer (2) according to claim 7-8 wherein said central server (30) is **characterized in that** it comprises means (32, 34, 36, 38) to execute the method of any of claims 1 to 4.

10. A software product with instructions configured for execution by one or more processors that, when executing by a mobile device (100) according to claim 5-6 and/or a computer (2) according to claim 7-8 and/or the system of claim 9 they carry out the method according to any of claims 1 to 4.

Fig.1

FIG.2

FIG.3

# EP 2 983 082 A1

## INTERNATIONAL SEARCH REPORT

| International application No. |
|---|
| PCT/ES2014/070250 |

### A. CLASSIFICATION OF SUBJECT MATTER

*G06F7/06* (2006.01)

According to International Patent Classification (IPC) or to both national classification and IPC

### B. FIELDS SEARCHED

Minimum documentation searched (classification system followed by classification symbols)
G06F, H04L, H04W, H04H

Documentation searched other than minimum documentation to the extent that such documents are included in the fields searched

Electronic data base consulted during the international search (name of data base and, where practicable, search terms used)

EPODOC, INVENES, WPI, INSPEC

### C. DOCUMENTS CONSIDERED TO BE RELEVANT

| Category* | Citation of document, with indication, where appropriate, of the relevant passages | Relevant to claim No. |
|---|---|---|
| X | WO 2007005382 A2 (MICROSOFT CORP) 11/01/2007, resumen; párrafos [7, 8, 19 - 24, 27 - 29, 33 - 35]; | 1-10 |
| X | Badi, Bae, Moore, Meintanis, Zacchi,, Hsieh, Frank Shipman (Dpto. Computer Science Texas A&M University) & Marsall (Microsoft Corporation); "Recognizing User Interest and Document Value from Reading and Organizing Activities in Document Triage"; Published by  IUI '06 Proceedings of the 11th international conference on Intelligent user interfaces; Páginas 218 - 225; Publication date: 29/01/2006; ISBN: 1-59593-287-9; Order Number: 608060;  doi: 10.1145/1111449.1111496 URL:// http://pdf.aminer.org/000/459/204/recognizing_user_interest_and_document_value_from_reading_and_organizing.pdf | 1-10 |

☒ Further documents are listed in the continuation of Box C.     ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance. | |
| "E" | earlier document but published on or after the international filing date | |
| "L" | document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" | document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" | document published prior to the international filing date but later than the priority date claimed | |
| | | "&" document member of the same patent family |

| Date of the actual completion of the international search | Date of mailing of the international search report |
|---|---|
| 25/07/2014 | **(29/07/2014)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | B. Pérez García Telephone No. 91 3493408 |

Form PCT/ISA/210 (second sheet) (July 2009)

16

## INTERNATIONAL SEARCH REPORT

International application No.

PCT/ES2014/070250

| | C (continuation). DOCUMENTS CONSIDERED TO BE RELEVANT | |
|---|---|---|
| Category * | Citation of documents, with indication, where appropriate, of the relevant passages | Relevant to claim No. |
| A | US 6460036 B1 (HERZ FREDERICK S M) 01/10/2002, abstract; column 58, line 25 - column 59, line 61; | 1-10 |
| A | CN 102231165 A (UNIV ZHEJIANG) 02/11/2011, abstract; | 1-10 |

Form PCT/ISA/210 (continuation of second sheet) (July 2009)

## INTERNATIONAL SEARCH REPORT

Information on patent family members

International application No.

PCT/ES2014/070250

| Patent document cited in the search report | Publication date | Patent family member(s) | Publication date |
|---|---|---|---|
| WO2007005382 A2 | 11.01.2007 | KR20080024157 A | 17.03.2008 |
| | | JP2009500747 A | 08.01.2009 |
| | | JP5021640B B2 | 12.09.2012 |
| | | EP1897002 A2 | 12.03.2008 |
| | | CN101501627 A | 05.08.2009 |
| | | CN101501627B B | 21.12.2011 |
| | | US2007016553 A1 | 18.01.2007 |
| | | US7693817 B2 | 06.04.2010 |
| US6460036 B1 | 01.10.2002 | US2013059607 A1 | 07.03.2013 |
| | | US2012102523 A1 | 26.04.2012 |
| | | US2009234878 A1 | 17.09.2009 |
| | | US2008294584 A1 | 27.11.2008 |
| | | US8171032 B2 | 01.05.2012 |
| | | US2006161952 A1 | 20.07.2006 |
| | | US8056100 B2 | 08.11.2011 |
| | | US2006150216 A1 | 06.07.2006 |
| | | US7853600 B2 | 14.12.2010 |
| | | US2003037041 A1 | 20.02.2003 |
| | | US7483871 B2 | 27.01.2009 |
| | | US2001014868 A1 | 16.08.2001 |
| | | US6020883 A | 01.02.2000 |
| | | US6088722 A | 11.07.2000 |
| | | US6029195 A | 22.02.2000 |
| | | MX9703967 A | 28.02.1998 |
| | | WO9617467 A2 | 06.06.1996 |
| | | WO9617467 A3 | 26.09.1996 |
| | | EP0796538 A2 | 24.09.1997 |
| | | EP0796538 A4 | 18.08.1999 |
| | | DE69530995T T2 | 22.04.2004 |
| | | CA2207868 A1 | 06.06.1996 |
| | | CA2207868 C | 09.05.2006 |
| | | AU4410396 A | 19.06.1996 |
| | | AU703247B B2 | 25.03.1999 |
| | | AT242581T T | 15.06.2003 |
| | | US5835087 A | 10.11.1998 |
| | | US5754939 A | 19.05.1998 |
| | | US5754938 A | 19.05.1998 |
| | | US5734720 A | 31.03.1998 |
| | | US5758257 A | 26.05.1998 |
| CN102231165 A | 02.11.2011 | CN102231165B B | 09.01.2013 |

Form PCT/ISA/210 (patent family annex) (July 2009)

**EP 2 983 082 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011139477 A